# EUROPÄISCHE PATENTSCHRIFT

(11) **EP 1 523 953 B1**
(45) Veröffentlichungstag und Bekanntmachung des Hinweises auf die Patenterteilung: **12.10.2011**
(21) Anmeldenummer: 04019179.3
(22) Anmeldetag: 12.08.2004
(51) Int. Cl.: A61C 5/10, A61C 5/09, A61C 13/09, A61C 13/00

(54) **Zahnrestaurationsteil**
Dental restoration piece
Elément de restauration dentaire

(30) Priorität: 17.10.2003 DE 10348370
(43) Veröffentlichungstag der Anmeldung: 20.04.2005
(73) Patentinhaber: Ivoclar Vivadent AG, 9494 Schaan (LI)
(72) Erfinder: Foser, Hans-Peter, 9496 Balzers (LI)
(74) Vertreter: Baronetzky, Klaus

(56) Entgegenhaltungen:
- DE-A1- 4 133 690
- DE-C1- 19 628 930
- DE-C1- 19 850 451
- US-A- 4 828 117

## Beschreibung

Die Erfindung betrifft ein Zahnrestaurationsteil gemäß dem Oberbegriff von Anspruch 1 sowie ein Verfahren zur Herstellung eines Zahnrestaurationsteils, gemäß dem Oberbegriff von Anspruch 12.

Ein derartiges Zahnrestaurationsteil ist aus der DE 41 33 690 bekannt. Bei einer derartigen Lösung werden plastische Fertigteilkronen und Kauflächen verwendet, die als Ganzes auf einem Unterbau aufgebracht werden. Nach dem Aufbringen wird das plastische Halbzeug durch UV-Licht gehärtet, so dass es als korrigierte Kaufläche zur Verfügung steht. Derartige Kauflächen sind vergleichsweise weich. Zudem erfordert das Nachmodellieren der Kauflächen intensive Handarbeit, und das Ergebnis der Restauration hängt sehr von der Geschicklichkeit des Zahnarztes oder gegebenenfalls des Zahntechnikers ab, die gewünschte Höckerform bereitzustellen.

Ferner sind Fertigelemente für die Herstellung von Zahnersatz bereits bekannt geworden, beispielsweise aus der DE-C1-198 50 451. Diese Lösung ist für die Realisierung einer Prefacette geeignet, bei der ein Metallgerüst von einem Opaker abgedeckt wird und hierauf eine Schicht aus Dentinmaterial-Keramik aufgebracht wird. Die Prefacette legt hierbei exakt die Form der Schneide fest. Die dem Dentin nachgebildete Keramikschicht muss eine exakte Form haben, damit keine Ausrichtfehler entstehen. Durch das Aufbringen von zwei Schichten lässt sich zwar ein ästhetisch ansprechendes Ergebnis erzielen, jedoch ist hier eine recht genaue Bearbeitung erforderlich, um sicher zu vermeiden, dass Zahnstellungsfehler entstehen.

Die US 4,626,215 beschreibt eine Vorrichtung zur Verbesserung der Mastikation bei Zahnrestaurationen, bei der Stahlkugeln, die in die Zahnrestauration eingebettet werden, eine bessere Okklusaloberfläche bereitstellen sollen.

Die DE 295 21 663 U1 beschreibt eine vollkeramische Zahnkrone, die eine auf ihrer Innenseite aufgebrachte plastisch verformbare Schicht sowie eine weitere Schicht, beispielsweise aus Zinkoxid-Phosphatzement, aufweist.

Die DE 196 28 930 C1 beschreibt ein Verfahren zur Herstellung eines Zahnersatzteiles, bei dem ein aus einer silikatisierten Metallkappe und ggf. einer Opakerschicht bestehender Kronenkern mit einer abschließenden Verblendung aus Dentalkunststoff oder - keramik mittels einer Zementschicht mit dem Zahnstumpf verbunden wird. Desweiteren kann eine weitere Schicht Dentalkunststoff im Innenraum des Kronenkerns zum Einsatz kommen.

Demgegenüber liegt der Erfindung die Aufgabe zu Grunde, ein Zahnrestaurationsteil gemäß dem Oberbegriff von Anspruch 1 sowie ein Verfahren zur Herstellung eines Zahnrestaurationsteils gemäß dem Oberbegriff von Anspruch 12 zu schaffen, die eine flexiblere Bedienung bei rascher Herstellung der Zahnrestauration ermöglichen, ohne dass handwerklich besondere Anforderungen gestellt würden.

Diese Aufgabe wird erfindungsgemäß durch die Ansprüche 1 und 12 gelöst. Vorteilhafte Weiterbildungen ergeben sich aus den Unteransprüchen.

Erfindungsgemäß besonders günstig ist es, dass mindestens ein Kauelement, bevorzugt zwei Kauelemente, als vorgefertige Elemente bereitgestellt werden und damit die Höckerformen in industriell vorgefertigter und damit insofern optimierter Gestalt frei von manuellen Eingriffen des Zahnarztes oder Zahntechnikers sind.

Hierdurch lässt sich die Zeit für die Bereitstellung einer individuell optimierten Kaufläche signifikant reduzieren und auch das Ergebnis der Restauration ergibt eine verbesserte Ausgestaltung. Der Zahnarzt muss lediglich nach Aufstellen der Zähne, beispielsweise im Artikulator, das Verbindungsmaterial in einer Weise bearbeiten, dass es sich bündig an die Ränder der Kauflächenelemente oder Kauelemente anschließt. Es versteht sich, dass durch Bereitstellung unterschiedlicher Kauflächenelemente auch unterschiedliche Zahnformen realisierbar sind. Beispielsweise ergibt eine stärkere Konvexität der Kauflächenelemente typischerweise einen größeren interkoronaren Freiraum.

Erfindungsgemäß besonders günstig ist es, dass durch die Einbettung des Kauelements in das gegenüber dem Kauelement weichere Verbindungsmaterial die Vorteile von Keramik- und von Kunststoffkronen kombiniert werden: die elastische Lagerung des Kauelements reduziert die Belastung für den Antagonisten des restaurierten Zahns, während aufgrund der harten Kaufläche der Verschleiß gering ist.

Erfindungsgemäß lässt sich das Verbindungsmaterial in überraschend einfacher Weise vor Ort härten. Es ist möglich, eine Wärmehärtung für die Bereiche des Verbindungsmaterial, wenn es aus Kunststoff besteht, vorzunehmen, die von den Kauelementen abgedeckt sind, so dass sie sich nicht durch Licht polymerisieren lassen.

Während grundsätzlich wärme- und/oder lichthärtbare Kunststoffe als Kunststoffmaterial bevorzugt sind, lässt sich ein viskos eingestellter Zahnzement in ähnlicher Weise verwenden, der gegebenenfalls dann noch mit einer geeigneten Schutzschicht, beispielsweise wiederum aus Kunststoff, abgedeckt werden kann.

Überraschend ergeben sich trotz der Verwendung von 2 oder 3 verschiedenen Materialen mit unterschiedlichen Wärmeausdehnungskoeffizienten keine Randspalten. Erfindungsgemäß ist es besonders günstig, dass das zeitaufwendige Brennen des Überbaus nicht erforderlich ist, was die Zykluszeit für die Herstellung eines Zahnrestaurationsteils im Dentallabor wesentlich reduziert.

In diesem Zusammenhang ist es auch günstig, dass sich ein erfindungsgemäß hergestelltes Zahnrestaurationsteil auch gut polieren lässt, wobei auch der Übergang zwischen dem Verbindungsmaterial und dem Kauelement spaltfrei bereitstellbar ist.

Erfindungsgemäß ist es darüberhinaus günstig, dass durch die relativ weiche Einbettung der Kauelemente in das gegenüber den Kauelementen weichere Verbindungsmaterial Ermüdungsbrüche der hart eingestellten Kauelemente deutlich seltener auftreten, und zwar sowohl, wenn besonders harter Kunststoff für die Kauelemente verwendet wird, als auch wenn eine harte Keramik für das Kauelement verwendet wird.

Erfindungsgemäß besonders günstig ist es, dass das Kauelement, das eine Teilkaufläche bilden kann, vorgefertigt ausgebildet sein kann, so dass sich eine besonders gute Oberflächenqualität realisieren lässt.

Erfindungsgemäß ist es auch möglich, Oxidkeramik, auch Zirkonoxid, für die Kauelemente zu verwenden, die aufgrund Ihrer Härte andernfalls die Antagonisten schädigen würden, wobei erfindungsgemäß dies durch die weiche Einbettung verhindert wird.

Es versteht sich, dass die Anzahl der Kauelemente in beliebiger Weise an die Erfordernisse anpassbar ist. Beispielsweise können für die Prämolaren halbierte Kauflächen vorgesehen sein, also zwei Kauelemente auf dem Verbindungsmaterial aufgebracht werden, während bei den Molaren entsprechend der Höckeranzahl drei oder vier Kauelemente eingesetzt werden können.

Besonders günstig ist es, dass die Höckerneigung individuell einstellbar ist. Hierdurch lässt sich die gewünschte Okklusionssituation optimal und fein eingestellt festlegen.

In vorteilhafter Ausgestaltung der Erfindung können auch Zwischenglieder industriell vorgefertigt und mit dem erfindungsgemäßen Verbindungsmaterial relativ weich verankert sein.

Für die Herstellung eines erfindungsgemäßen Zahnrestaurationsteils wird bevorzugt zunächst die erforderliche Präparation vorgenommen. Der Unterbau wird fertig konstruiert, beispielsweise mit einer Metalllegierung oder in Vollkeramik oder in beliebiger geeigneter anderer Weise. Es wird ein Meistermodell aus Gips in konventioneller Weise abgeformt und hergestellt. Auf den Unterbau wird ein Verbindungsmaterial aufgebracht und zwar in einer solcher Viskosität, dass eine Verformung noch möglich ist, dass aber andererseits sich das Verbindungsmaterial nicht durch die Schwerkraft verformt. Die Kauelemente werden nun entsprechend der Bisssituation aufgebracht und im Artikulator justiert. Hierzu werden sie in die Verbindungsmasse gedrückt, wobei eine Feinjustierung vorgenommen werden kann.

Durch die Aushärtung wird das so gewonnene Zahnrestaurationsteil in seiner Position fixiert. Es kann auch eine Aufschlüsselung über einen Silikonschlüssel erfolgen. Gegenüber der Präparationsgrenze verbleibt ein geringer Freiraum, der mit geeigneten Mitteln, wie beispielsweise ebenfalls lichthärtenden Kunststoff gefüllt und dann schließlich die Härtung vorgenommen wird.

Erfindungsgemäß ist es bevorzugt, die Befestigung des Unterbaus auf einem Zahnstumpf vorzunehmen. Hierdurch lässt sich eine dauerhafte kraft- und formschlüssige Abstützung realisieren, die sich aufgrund der entsprechenden vorbereitenden Präparation harmonisch einfügen lässt. Alternativ ist es jedoch genauso möglich, den Unterbau auf einem Zahnstift oder gegebenenfalls auch auf einem Geschiebe zu befestigen, die wiederum in üblicher Weise verankert sind.

Weitere Vorteile, Einzelheiten und Merkmale ergeben sich aus der nachfolgenden Beschreibung eines Ausführungsbeispiels der Erfindung anhand der Zeichnungen.

Es zeigen:
- Fig. 1: eine schematische Darstellung eines Unterkiefers nach der Präparation für die Aufnahme eines erfindungsgemäßen Zahnrestaurationsteils;
- Fig. 2: eine Darstellung einer Ausführungsform eines erfindungsgemäßen Zahnrestaurationsteils während der Herstellung;
- Fig. 3: eine modifizierte Ausführungsform gegenüber Fig. 3; und
- Fig. 4: die Darstellung eines fertigen Gerüstunterbaus für das Zahnersatzteil gemäß einer der Figuren 2 und 3.

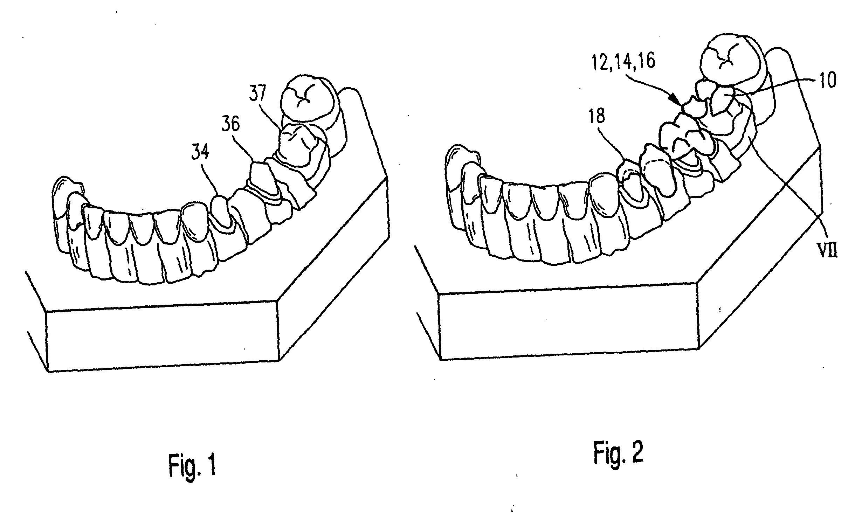

Wie es aus Fig. 1 ersichtlich ist, wird zunächst ein zu restaurierender Zahnbereich, hier im Beispielsfalle der Unterkiefer-Seitenzahnbereich, in an sich bekannter Weise präpariert, so dass die Pfeilerzähne 34, 36 und 37 verbleiben. In üblicher Weise wird ein Meistermodell per Abformen hergestellt, bevorzugt aus Superhartgips. Basierend hierauf wird in an sich bekannter Weise ein Unterbau erstellt. Der Unterbau lässt sich beispielsweise in einen Artikulator einsetzen, aber auch probehalber auf die Pfeilerzähne aufsetzen.

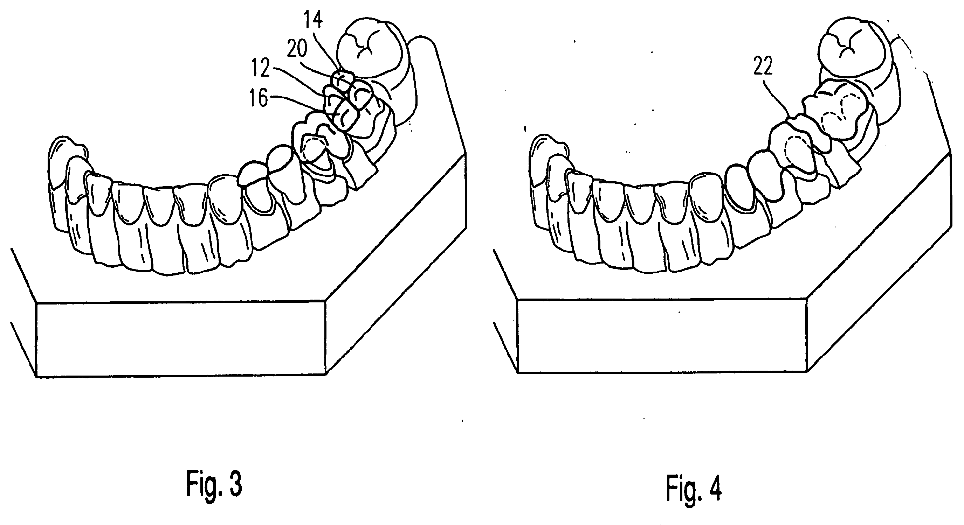

Erfindungsgemäß wird auf den - hier nicht dargestellten - Unterbau gemäß Fig. 2 ein Verbindungsmaterial 10 aufgebracht, das die Form der späteren Zahnrestauration im Wesentlichen bereits hat. Das Verbindungsmaterial 10 ist im auf den Unterbau aufgebrachten Zustand noch verformbar. In das Verbindungsmaterial 10 werden nun erfindungsgemäß Kauelemente eingedrückt, wobei in Fig. 3 auf den Zahn VII drei Kauelemente 12, 14 und 16 aufgebracht werden.

Der Vorteil dieser Lösung liegt darin, dass die Feinpositionierung auch über das Gegenmodell im Artikulator präzise eingestellt werden kann; durch den erfindungsgemäßen halbfesten Zustand der Masse, die für das Verbindungsmaterial verwendet wird, lässt sich die erwünschte Stellung ohne weiteres realisieren.

Es versteht sich, dass durch das Eindrücken der Kauelemente 12 bis 16 Materialüberschuss entsteht. Dieser kann leicht nach Fertigstellung der Restauration, oder zu einem beliebigen Zeitpunkt nach dem Eindrücken der Kauflächenelemente, entfernt werden.

Besonders günstig bei dieser Lösung ist es, dass die Höckerneigung sehr feinfühlig individuell einstellbar ist. Damit sind mit den gleichen Kauflächenelementen sowohl steile als auch flache Höcker realisierbar, aber auch Zwischenpositionen hierzu. Die Lagerhaltung von Kauflächenelementen für das erfindungsgemäße Zahnrestaurationsteil ist damit sehr gering.

In der Ausführungsform gemäß Fig. 2 ist neben den Kauelementen 12 bis 16 für den Molaren VII ein Kauelement 18 für den Zahn IV vorgesehen, das in gleicher Weise erfindungsgemäß einstellbar ist.

Während Fig. 2 einen Molaren VII mit zwei lingualen und einem bukkalen Höcker entsprechend dem Kauelementen 12, 14 und 18 zeigt, ist aus Fig. 3 ein Molar VII mit vier Höckern 12, 14, 16 und 20, also dementsprechend vier so ausgebildeten Kauelementen vorgesehen. Bei dieser Ausführungsform wird zunächst die Position der Kauelemente mittels Silikon in in-situ erhalten; der Aufbau des Gerüsts erfolgt bei dieser Ausführungsform anschließend hieran.

Es versteht sich, dass - auch wenn Überbau und Unterbau aneinander angepasst werden müssen - insofern eine gewisse Parallelisierung bei der Herstellung möglich ist, die weiter zeitersparend wirkt.

Die Herstellung des Gerüsts oder Unterbaus ist aus Fig. 4 ersichtlich. Bei dieser Ausführungsform werden die Kauflächenelemente mittels Silikonschlüssel 22 fixiert und die Befestigung auf den Pfeilerzähnen erfolgt dann mit lichthärtendem Kunststoff in an sich bekannter Weise an den Präparationsgrenzen.

Es versteht sich, dass hier auch ein selbsthärtender Kunststoff verwendbar ist.

Ferner versteht es sich, dass die erfindungsgemäße Abfolge harter Kauflächenelemente und eines demgegenüber weicheren Verbindungsmaterials nicht ausschließt, dass zusätzlich weicheres oder härteres Material eingesetzt wird. So können beispielsweise auch Keramik-Unterbauteile in an sich bekannter Weise über Zahnzement miteinander verbunden sein. Die erfindungsgemäßen Kauflächenelemente sind nicht auf die Ausführung in einer Oxidkeramik beschränkt; vielmehr kann anstelle dessen auch ein vorgefertigter und hart eingestellter Kunststoff verwendet werden.

## Patentansprüche

1. Zahnrestaurationsteil, mit einem eingliedrigen oder mehrgliedrigen Unterbau sowie einem mit dem Unterbau verbindbaren und diesen mindestens teilweise abdeckenden Überbau, wobei pro Zahn der Überbau mindestens teilweise eine Kaufläche bildet, wobei die Kaufläche des Überbaus durch wenigstens zwei einzelne Teilkauflächen gebildet ist, wobei jede der Teilkauflächen jeweils aus einem harten vorgefertigten Kauelement (12, 14, 16, 20) besteht, das höckerförmig ausgebildet ist, und wobei der Überbau des Zahnrestaurationsteils wenigstens ein Verbindungsmaterial (10) aufweist, zum Verbinden der einzelnen Kauelemente (12, 14, 16, 18) mit dem Unterbau, **dadurch gekennzeichnet, dass** die einzelnen Kauelemente durch das Verbindungsmaterial (10) weich eingebettet sind, und dass die Höckerneigung der harten Kauelemente (12, 14, 16, 20) individuell einstellbar ist.

2. Zahnrestaurationsteil nach Anspruch 1, **dadurch gekennzeichnet, dass** das Verbindungsmaterial (10) und/oder ein Verblendungsmaterial den Unterbau abdeckt und eventuell auch anderes Material (Verblendmaterial) außerhalb der harten Kauelemente (12, 14, 16) freiliegt, also unabgedeckt ist.

3. Zahnrestaurationsteil nach einem der vorhergehenden Ansprüche, **dadurch gekennzeichnet, dass** das Verbindungsmaterial (10) oder das Verblendungsmaterial ein Kunststoff, insbesondere ein lichthärtbarer oder in-situ härtbarer Kunststoff, ist.

4. Zahnrestaurationsteil nach einem der vorhergehenden /4 Ansprüche, **dadurch gekennzeichnet, dass** jedes Kauelement (12, 14, 16, 18) aus vorgefertigter Keramik besteht, insbesondere aus einer Aluminiumoxidkeramik oder einer Zirkonoxidkeramik oder Glaskeramik oder Mischungen dieser besteht.

5. Zahnrestaurationsteil nach einem der Ansprüche 1 bis 3, **dadurch gekennzeichnet, dass** jedes Kauelement (12, 14, 16, 18) aus vorgefertigtem Kunststoff besteht, insbesondere aus einem vorgefertigten Kunststoffelement, bevorzugt einem licht- oder wärmevorgehärteten Kunststoffelement.

6. Zahnrestaurationsteil nach einem der vorhergehenden Ansprüche, **dadurch gekennzeichnet, dass** der Unterbau ein Metallgerüst, ein Metall-Keramikgerüst, ein Keramikgerüst, ein Kunststoffgerüst und/oder ein Kunststoff-Glasfasergerüst aufweist.

7. Zahnrestaurationsteil nach einem der vorhergehenden Ansprüche, **dadurch gekennzeichnet, dass** pro Zahn eins, zwei, drei oder vier Kauelemente (12, 14, 16, 18) vorgesehen sind, die an den Höckern entsprechenden Stellen angebracht sind und dass das zahnrestaurationsteil für Prämolare oder Molare bestimmt ist.

8. Zahnrestaurationsteil nach einem der vorhergehenden Ansprüche, **dadurch gekennzeichnet, dass** mindestens ein seitlicher Freiraum des Gerüsts, dass mindestens ein seitlicher Freiraum des Gerüsts, der sich zwischen der Präparationsgrenze des zu restaurierenden Zahns und dem Kauelement (12, 14, 16) erstreckt von dem Verbindungsmaterial (10) oder Verblendungsmaterial abgedeckt ist.

9. Zahnrestaurationsteil nach einem der vorhergehenden Ansprüche,
**dadurch gekennzeichnet, dass** der seitliche Freiraum sich an zwei einander gegenüberliegenden Seiten erstreckt, also bukkal/distal und dass die je anderen Seitenflächen von Seitenzungen des Überbaus abgedeckt sind.

10. Zahnrestaurationsteil nach einem der vorhergehenden Ansprüche, **dadurch gekennzeichnet, dass** der Überbau den Unterbau unter Verwendung des Verbindungsmaterials (10) und/oder des Verblendungsmaterials den Unterbau bis zur Präparationsgrenze des zu restaurierenden Zahns vollständig abdeckt.

11. Verfahren zur Herstellung eines zahnrestaurationsteils nach einem der vorhergehenden Ansprüche, mit einem Kauelement, das als Teil eines Überbaus auf einem Unterbau aufgebracht wird,
**dadurch gekennzeichnet, dass** auf den Unterbau ein Verbindungsmaterial (10) aufgebracht und gegebenenfalls mindestens teilweise vorgehärtet wird und dass dann mindestens zwei jeweils eine Teilkaufläche bildende harte Kauelemente (12, 14, 16, 18), welche vorgefertigt sind, in das Verbindungsmaterial (10) gedrückt und entsprechend der Bisssituation ausgerichtet werden, dass anschließend hieran eine vollständige Aushärtung, insbesondere mit Licht und/oder Wärme des Verbindungsmaterials (10) vorgenommen wird und dass insbesondere der bukkale/linguale und/oder mesiale/distale Freiraum zwischen der Präparationsgrenze des zu restaurierenden Zahns und den harten Kauelementen (12, 14, 16, 18) mit dem Verbindungsmaterial (10) und/oder Verblendungsmaterial ausgefüllt und dieses gehärtet wird.

## Claims

1. A dental restoration part, comprising a base structure formed of a single member or multiple members as well as an over structure which is connectable to the base structure in a manner in which the over structure at least partially covers the base structure, said over structure at least partially forming a chewing area, said chewing area of the over structure being formed of individual chewing subareas, each of said chewing subareas consisting of a hard chewing element (12, 14, 16, 18), and said over structure of the dental restoration piece comprising at least an interconnecting material (10) for connecting the individual chewing elements (12, 14, 16, 18) to the base structure, wherein the individual chewing elements are softly embedded by means of the interconnecting material (10).

2. A dental restoration part as claimed in claim 1, wherein the interconnecting material (10) and/or a veneer material covers the base structure and, optionally, also a different material (veneer material) is exposed on the base structure exteriorly of the hard chewing elements (12, 14, 16), thus being in an uncovered condition.

3. A dental restoration part as claimed in one of the preceding claims, wherein the interconnecting material (10) or the veneer material is a plastic material, especially a light-curable or in-situ curable plastic material.

4. A dental restoration part as claimed in one of the preceding claims, wherein each of the chewing elements (12, 14, 16, 18) consists of a pre-fabricated ceramic, especially of an aluminium oxide ceramic, or a zirconium oxide ceramic, or a glass ceramic, or a mixture of such ceramics.

5. A dental restoration part as claimed in one of the claims 1 to 3, wherein each chewing element (12, 14, 16, 18) consists of a pre-fabricated plastic material, especially of a pre-fabricated plastic element, preferably a plastic element that has been precured by light or heat.

6. A dental restoration part as claimed in one of the preceding claims, wherein the base structure comprises a metal frame, a metal-ceramic frame, a ceramic frame, a plastic frame and/or a plastic-fibre glass frame.

7. A dental restoration part as claimed in one of the preceding claims, wherein one, two, three or four chewing elements (12, 14, 16, 18) are provided for each single tooth, said chewing elements being fastened to positions of the tooth corresponding to the tooth protuberance locations and wherein the dental restoration part is specifically destined for a pre-molar or a molar.

8. A dental restoration part as claimed in one of the preceding claims, wherein at least one lateral free play space of the frame or base structure, which extends between the preparation border of the tooth to be restored and the chewing element (12, 14, 16), is covered by the interconnecting material (10) or the veneer material.

9. A dental restoration part as claimed in one of the preceding claims, wherein the lateral free play space extends on two oppositely disposed sides, that is to say buccaly/distally, and wherein the respective other sides are covered by lateral extending portions of the over structure.

10. A dental restoration part as claimed in one of the preceding claims, wherein the over structure fully covers the base structure by using the interconnecting material (10) and/or the veneer material which extends up to the preparation border of the tooth to be restored.

11. A method for producing a dental restoration part according to one of the preceding claims, said dental restoration part comprising a chewing element that is applied to the base structure as a part of an over structure, wherein the method comprises the steps of applying an interconnecting material (10) onto the base structure, said interconnecting material, if applicable, being at least partially precured, and then the step of pressing at least two of pre-fabricated hard chewing elements (12, 14, 16, 18) forming one chewing subarea into the interconnecting material (10) and aligning them corresponding to the chewing situation, and the subsequent step of fully curing, in particular with the aid of light and/or heat, the interconnecting material (10), and wherein in particular the buccal/lingual and/or mesial/distal free play space between the preparation border of the tooth to be restored and the hard chewing elements (12, 14, 16, 18) is filled with the interconnecting material (10) and/or veneer material, which is cured.

## Revendications

1. Elément de restauration dentaire, comportant une structure sous-jacente à un élément ou à plusieurs éléments et une structure supérieure pouvant être reliée à la structure sous-jacente et recouvrant celle-ci au moins partiellement, la structure supérieure formant au moins partiellement une surface de mastication, la surface de mastication de la structure supérieure étant formée de surfaces de mastications partielles individuelles, chaque surface de mastication partielle étant constituée respectivement d'un élément de mastication dur (12, 14, 16, 18) et la structure supérieure de l'élément de restauration dentaire présentant au moins un matériau de liaison (10) pour relier les éléments de mastication individuels (12, 14, 16, 18) avec la structure sous-jacente, **caractérisé en ce que** les éléments de mastication individuels sont incorporés de façon souple par le matériau de liaison (10).

2. Elément de restauration dentaire selon la revendication 1, **caractérisé en ce que** le matériau de liaison (10) et/ou un matériau de revêtement recouvre la structure sous-jacente et éventuellement également un autre matériau (matériau de revêtement) à l'extérieur des éléments de mastication durs (12, 14, 16) est nu et est donc non recouvert.

3. Elément de restauration dentaire l'une quelconque des revendications précédentes, **caractérisé en ce que** le matériau de liaison (10) ou le matériau de revêtement est une matière plastique, en particulier une matière plastique durcissable à la lumière ou in situ.

4. Elément de restauration dentaire selon l'une quelconque des revendications précédentes, **caractérisé en ce que** chaque élément de mastication (12, 14, 16, 18) est constitué de céramique préformée, en particulier d'une céramique d'oxyde d'aluminium ou d'une céramique d'oxyde de zirconium ou d'une vitrocéramique ou de mélanges de celles-ci.

5. Elément de restauration dentaire selon l'une quelconque des revendications 1 à 5, **caractérisé en ce que** chaque élément de mastication (12, 14, 16, 18) est constitué d'une matière plastique préformée, en particulier d'un élément de matière plastique préformé, de préférence d'un élément de matière plastique durci au préalable par la lumière ou la chaleur.

6. Elément de restauration dentaire selon l'une quelconque des revendications précédentes, **caractérisé en ce que** la structure sous-jacente présente une charpente métallique, une charpente de métal-céramique ou une charpente de céramique, une charpente de plastique et/ou une charpente de plastique-fibres de verre.

7. Elément de restauration dentaire selon l'une quelconque des revendications précédentes, **caractérisé en ce que**, par dent, un, deux, trois ou quatre éléments de mastication (12, 14, 16, 18) sont prévus, qui sont montés sur les pics de sites correspondants, et **en ce que** l'élément de restauration dentaire est conçu pour des prémolaires ou des molaires.

8. Elément de restauration dentaire selon l'une quelconque des revendications précédentes, **caractérisé en ce qu'**au moins un espace libre latéral de la charpente qui s'étend entre la limite de préparation de la dent à restaurer et l'élément de mastication (12, 14, 16) est recouvert par le matériau de liaison (10) ou le matériau de revêtement.

9. Elément de restauration dentaire selon l'une quelconque des revendications précédentes, **caractérisé en ce que** l'espace libre latéral s'étend sur deux côtés opposés l'un à l'autre, c'est-à-dire sur le plan vestibulaire/distal et **en ce que** les autres surfaces latérales respectives sont recouvertes de pattes latérales de la structure supérieure.

10. Elément de restauration dentaire selon l'une quelconque des revendications précédentes, **caractérisé en ce que** la structure supérieure recouvre complètement la structure sous-jacente en utilisant le matériau de liaison (10) et/ou le matériau de revêtement recouvre complètement la structure sous-jacente jusqu'à la limite de préparation de la dent à restaurer.

11. Procédé de production d'un élément de restauration dentaire selon l'une quelconque des revendications précédentes, comportant un élément de mastication qui est monté en tant qu'élément d'une structure supérieure sur une structure sous-jacente, **caractérisé en ce que** sur la structure sous-jacente, un matériau de liaison (10) est appliqué et éventuellement est durci au moins partiellement et **en ce que** au moins deux éléments de mastication durs (12, 14, 16, 18) formant respectivement une surface de mastication partielle qui sont préformés, sont pressés dans le matériau de liaison (10) et orientés selon la situation d'occlusion, **en ce que** ensuite, un durcissement complet du matériau de liaison (10), en particulier avec la lumière et/ou la chaleur est réalisé, et **en ce que** en particulier, l'espace libre vestibulaire/lingual et/ou mésial/distal entre la limite de préparation de la dent à restaurer et les éléments de mastication durs (12, 14, 16, 18) sont remplis avec le matériau de liaison (10) et/ou le matériau de revêtement et celui-ci est durci.
